# EUROPEAN PATENT SPECIFICATION

(11) **EP 0 470 761 B1**
(45) Date of publication and mention of the grant of the patent: **25.01.1995**
(21) Application number: 91307051.2
(22) Date of filing: 31.07.1991
(51) Int. Cl.: C25B 1/00, C25B 11/16

(54) **Electrolytic ozone generation**
Elektrolytische Ozonherstellung
Production électrolytique d'ozone

(30) Priority: 08.08.1990 GB 9017404
(43) Date of publication of application: 12.02.1992
(73) Proprietor: JOHNSON MATTHEY PUBLIC LIMITED COMPANY, London EC1N 8JP (GB)
(72) Inventor: Edwards, Neil, Reading, Berkshire RG3 6BZ (GB); Scholey, Neil, Abingdon, Oxfordshire OX14 5LQ (GB)
(74) Representative: Wishart, Ian Carmichael

(56) References cited:
- EP-A- 0 041 365
- EP-A- 0 068 522
- WO-A-86/01542
- DE-A- 1 421 368
- PATENT ABSTRACTS OF JAPAN, vol. 13, no. 42 (C-564), 30th January 1989; & JP-A-63 238 293 (SASAKURA ENG. CO., LTD) 04-10-1988

## Description

This invention concerns the generation of ozone, by electrolytic means.

Ozone has a range of uses similar to that of chlorine, including the bleaching of clays and pulp and the treatment of drinking water, swimming pool water, municipal secondary effluents, high quality water (eg for electronic component manufacturing) and odours. It may also be used in organic synthesis for the oxidation of the carbon-carbon double bond, medical therapy and sterilisation. Examples of chemical syntheses using ozone include the production of silver oxide, heliotropin, pelargonic acid, azelaic acid, peracetic acid, germicides, steroids, Nylon-9 precursor and the separation of cerium from other rare earths. Ozone has a short half life and therefore does not present long term toxicity problems at low concentration in water, although this also means that maintaining sterility over long periods in the absence of further additions of ozone is difficult. For domestic water, for example, it is envisaged that chlorine may be added after disinfection using ozone, to maintain freedom from undesirable levels of micro-organisms in pipelines, tanks etc.

It is convenient to generate ozone at the point of use, and several methods may be used. The industrially adopted method is corona discharge. In this process an alternating high voltage is discharged through air or oxygen to produce a flow of gases containing up to approximately 4% ozone, the higher ozone concentrations being produced by the use of oxygen rather than air. Corona discharge methods have several disadvantages. For example, the equipment required is capital intensive and bulky. The process requires the feed gas to be cleaned, compressed, cooled and dried before passing to the discharge tube. The use of oxygen rather than air necessitates re-cycling of the oxygen in the effluent stream due to its high cost. Low ozone:oxygen ratios make dosage of the ozone into water difficult. An additional drawback is that appreciable amounts of nitrogen oxides may be produced when an air feed is used, ultimately producing nitric acid in the output stream unless the apparatus is kept scrupulously dry. Another method, although it is essentially of laboratory interest only, is the use of ultra-violet radiation. The action of ultraviolet light on the upper atmosphere is the main source of ozone in nature. At low pressures and temperatures, the resulting ozone is relatively stable, and has a half-life of some days, giving reasonable accumulations. The process is energetically inefficient and is only suitable as a laboratory technique for the production of very small quantities. A further method of generation is electrolysis of water, using low voltages and high currents. Yields of ozone of up to 50% by vol have been recorded, but under impractical conditions, at -50°C in eutectic sulphuric acid. The electrodes most generally used are of lead oxide, which are subject to rapid corrosion. Thanos et al, (Journal of Applied Electrochemistry 14 (1984) (389-399)) have studied the effect of varying physical conditions and electrolyte when using a lead oxide anode supported on titanium. One of the findings was that fluoride ion in amounts of 1-2.5mol dm⁻³ increased ozone yield in the systems studied. Ozone generation by electrolysis imposes very heavy demands on electrode materials, the anode having to run at highly oxidising potentials in an acidic environment (acid because protons are released at the anode when oxygen and/or ozone are produced). Platinum, glassy carbon and lead dioxide have all been used as the anode material to produce a high ratio of ozone:oxygen. However, work in aqueous mineral acid has shown that only the former material has sufficient durability, particularly at high current density. The use of high current density is recommended as this not only increases the ratio of ozone:oxygen, but minimises the physical size of the ozone generator.

We have studied the electrolytic production of ozone, with the object of increasing electrode stability and obtaining a higher ozone generating efficiency than conventional electrolytic production.

The present invention provides an ozone generating cell comprising an anode for forming ozone, said anode comprising a first electrolyte contacting area consisting essentially of at least one of tungsten, titanium, tantalum and niobium, and in contact therewith, a second electrolyte contacting area of platinum or a platinum-containing material, a cathode and an electrolyte.

Said platinum-containing material may be an alloy, a non-alloyed co-deposited mixture of metals, a sandwich structure with Pt layers, a wire, platinum metal as a dispersed powder adhering to the substrate by means of a binder (metallic and/or non-metallic), platinum and Ti, W, Ta, Nb and/or a mixture of Ti, Ta W, Nb, and/or with a binder material prepared by powder metallurgy into an electrode or formed onto a supporting material.

Preferably the second electrolyte contacting area is platinum. Preferably, the first electrolyte contacting area consists essentially of at least one of tungsten and niobium.

The second electrolyte contacting area comprises at least one area (hereinafter referred to as the catalytic area) of platinum or a platinum- containing material and may comprise a multiplicity of catalytic areas. Each catalytic area may have any symmetrical or non-symmetrical shape and may be, for example, circular, square, or rectangular in shape. Each catalytic area is up to 30 mm² preferably 0.005-25mm². The first electrolyte contacting area may be in the form of a monolithic electrode, or one in any desired form, and may form a layer in a layered electrode having an internal conductive matrix of different material. The form of the electrode, however, should be such as to provide ready release of evolved gas, especially so that the bubbles do not mask the catalytic areas. The deposition of the platinum or platinum-containing material may be carried out by any appropriate method, such as sputtering, welding, thick film methods, electro- or electroless plating, or by the deposition of small, dispersed areas of catalytic material or a precursor thereof, eg from solution, onto powder, which is then fabricated into an electrode using powder metallurgy techniques, or by deposition onto a suitable substrate already formed into shape, eg flat sheets or meshes.

The invention further provides a process for the production of ozone by electrolysis of an electrolyte characterised in that ozone is generated at an anode which comprises a first electrolyte contacting area which consists essentially of at least one of tungsten, titanium, tantalum and niobium, and in contact therewith, a second electrolyte contacting area of platinum or a platinum-containing material.

Suitable electrolytes include aqueous solutions of alkali-metal, alkaline earth-metal and ammonium-salts having anions which are resistant to oxidation, and certain organic and mineral acids. The electrolyte solution for use in the present invention may be acidic, neutral or alkaline, but is preferably acidic or neutral. Sulphuric acid is particularly suitable. Preferably sulphuric acid present is in a concentration of 0.01-8 N, eg 1-6 N and especially 1-4 N. The electrolyte may be liquid or solid. Solid polymer electrolytes may be employed. Preferably the electrolyte is liquid. The addition of fluoride ions to the electrolyte may be beneficial. Fluoride ions when present are preferably in a concentration of 0.001-10g/l, eg 0.01-2g/l.

Suitable cathodes are those which promote the evolution of hydrogen under the electrolysis conditions. However, hydrogen is not necessarily produced at the cathode. For example, no hydrogen is produced when the electrolyte is sodium persulphate. Platinum, or platinum-coated, cathodes are preferred, although other materials such as lead, platinum on carbon, palladium or Raney alloys may be used. It is envisaged that the cathode may be an air-breathing electrode.

The generation of ozone is best performed at low temperatures, the preferred temperature depending on a complex balance between the benefit in working at the lower temperature and the increased complexity of the generator, the cost of refrigeration etc; however, the use of a temperature much higher than 30°C would be of little value and the minimum is determined by the freezing point of the chosen electrolyte where the electrolyte is liquid. The process is easily operated at room temperature, and may be operated at lower pressures where minimum decomposition of ozone would be expected.

The actual mode of operation of the invention is not presently clear. If the first electrolyte contacting area is used without catalytic material, it is rapidly covered with an insulating layer of oxide which inactivates the anode. With even a single area of platinum in contact with the electrolyte and the first electrolyte contacting area, there is no inactivation. It is believed that a very much thinner layer of oxide is formed, which is still conductive. We do not wish to be limited in any way by the expression herein of theories as to operation of the invention.

Electrolysis may be carried out in cells which are resistant to attack under the electrolysis conditions. Suitable construction materials may be for example glass and polytetra fluoroethylene (PTFE).

The evolving gases, oxygen and ozone at the anode, and hydrogen at the cathode, must be kept separate to avoid the risk of explosion. The collection of the gases, and the distribution of the ozone-containing oxygen into the water supply, may be carried out using means generally known in the art, and these form no part of the present invention.

The present invention will now be described by way of example only.

### EXAMPLE 1

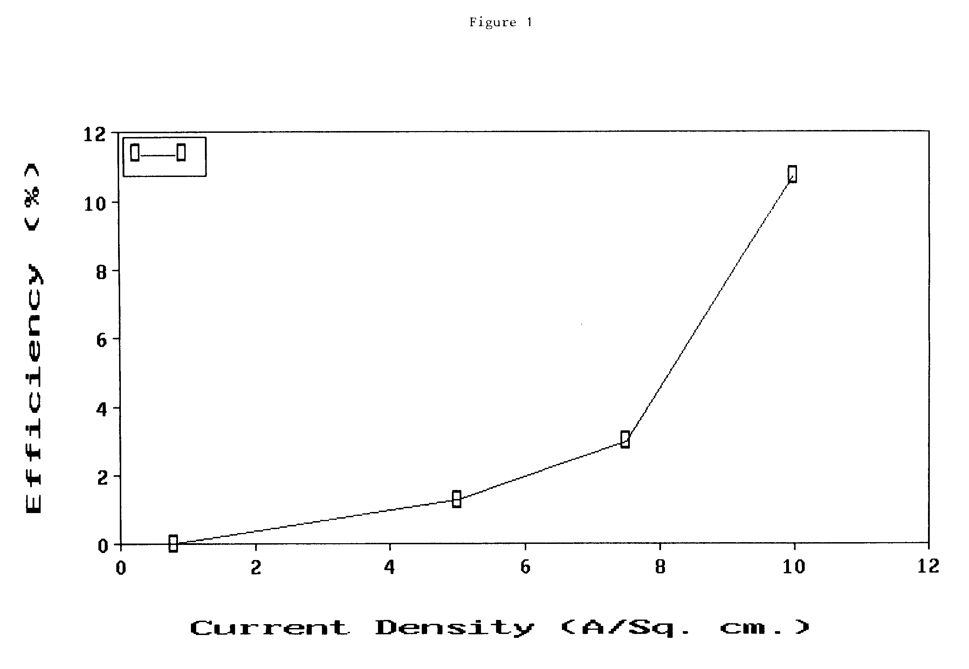

A square of platinum metal, 1mm² in area and approximately 0.2»m thick, was deposited by sputtering onto a piece of 99.8% pure niobium metal foil. This was used as the anode in an electrolysis cell using 1.5 N sulphuric acid at +5°C as the electrolyte. The current was gradually increased over a period of several hours, yielding ozone with up to 10.7 % current efficiency at 10 Acm⁻². A plot of efficiency versus current density is shown in Figure 1.

### EXAMPLE 2

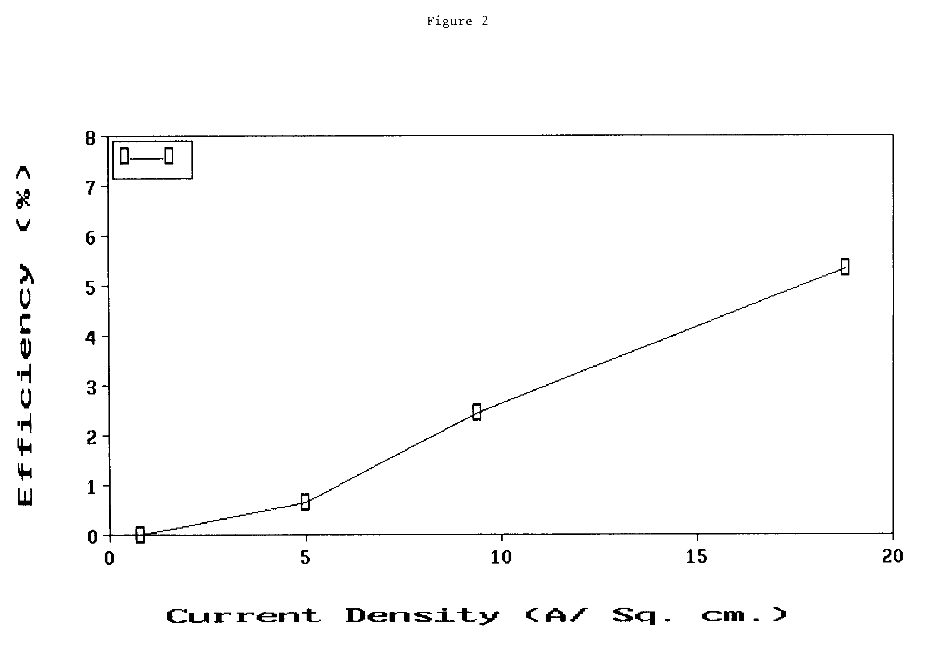

A square of platinum metal, 1mm² in area and approximately 0.2»m thick, was deposited by sputtering onto a piece of 99.9% pure tantalum metal foil. This was used as the anode in an electrolysis cell using 1.5 N sulphuric acid at +5°C as the electrolyte. The current was gradually increased over a period of several hours, yielding ozone with up to 5.4% current efficiency at 19 Acm⁻². Efficiency versus current density is shown in Figure 2.

### EXAMPLE 3

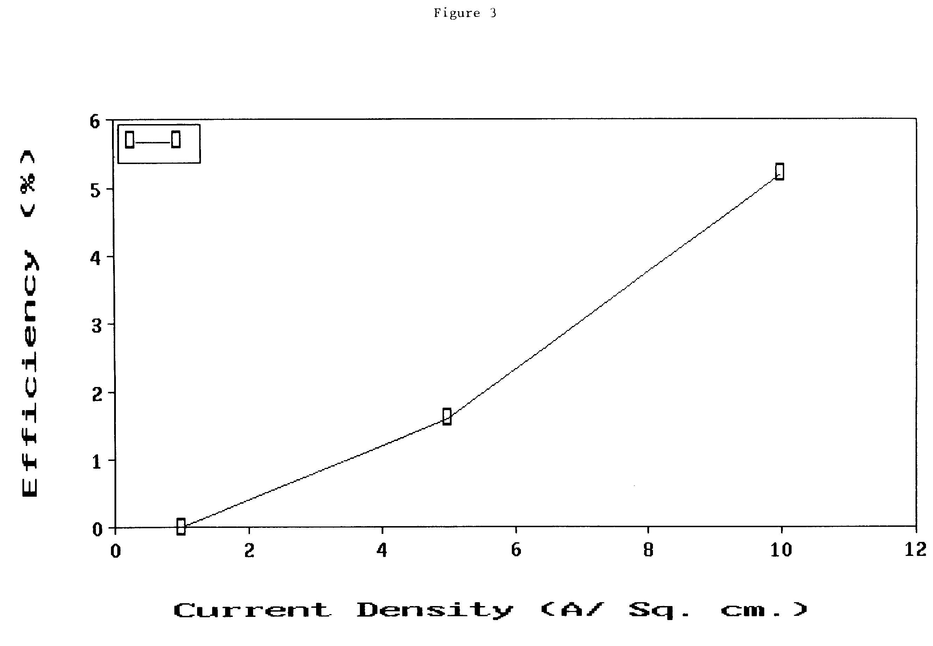

A square of platinum metal, 1mm² in area and approximately 0.2»m thick, was deposited by sputtering onto a piece of 99.7% pure titanium metal foil. This was used as the anode in an electrolysis cell using 1.5 N sulphuric acid at +5°C as the electrolyte. The current was gradually increased over a period of several hours, yielding ozone with up to 5.2% current efficiency at 10 Acm⁻². Efficiency versus current density is shown in Figure 3.

### EXAMPLE 4

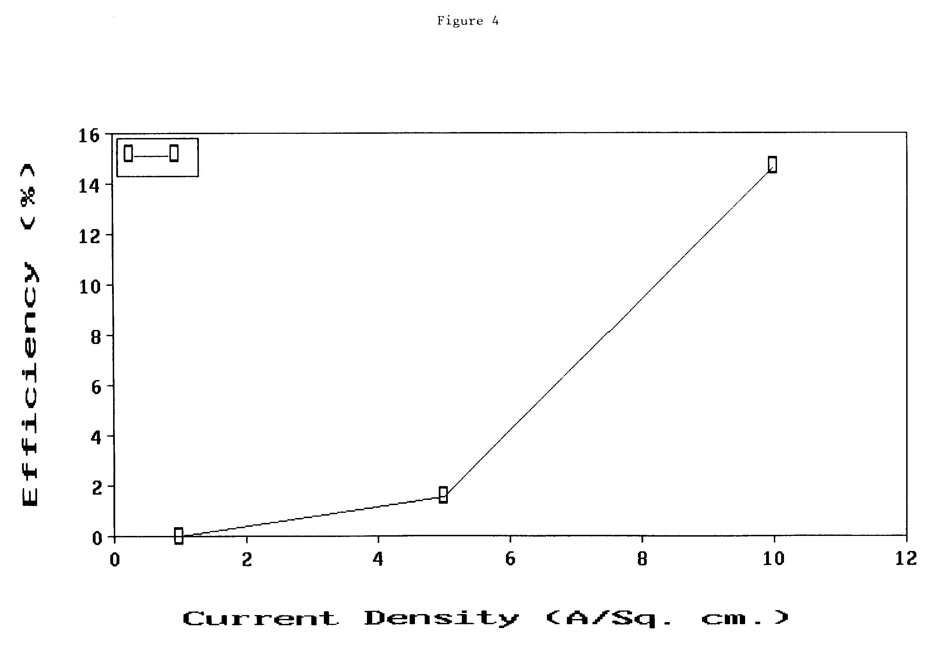

A square of platinum metal, 1mm² in area and approximately 0.2»m thick, was deposited by sputtering onto a piece of 99.8% pure tungsten metal foil. This was used as the anode in an electrolysis cell using 1.5 N sulphuric acid at + 5°C as the electrolyte. The current was gradually increased over a period of several hours, yielding ozone with up to 14% current efficiency at 10 Acm⁻². Efficiency versus current density is shown in Figure 4.

### EXAMPLE 5

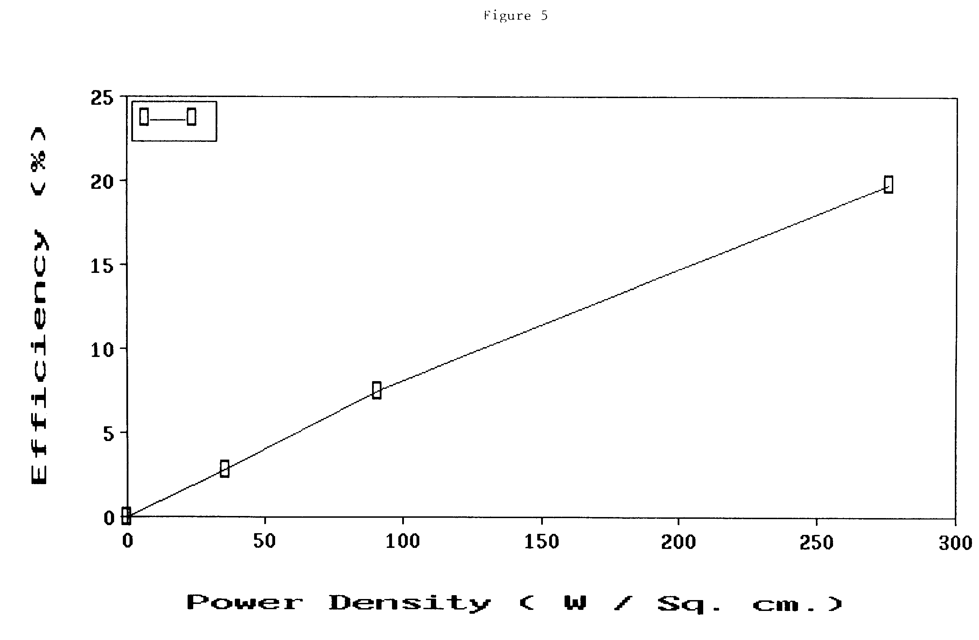

A bar-shaped area of platinum metal, 0.1mm x 16mm and approximately 0.2»m thick, was deposited by sputtering onto a piece of 99.8% pure tungsten metal foil. This was used as the anode in an electrolysis cell using 1.5 N sulphuric acid as the electrolyte at +5°C. An ozone generating efficiency of up to 20% was observed. Efficiency versus power density is shown in Figure 5.

### EXAMPLE 6 AND COMPARATIVE EXAMPLE A

A square of platinum metal, 1mm² in area, was deposited by sputtering onto a piece of tungsten metal foil of total area 100mm² and thickness 0.1mm. The electrode was tested as an anode in a laboratory electrolysis cell using an electrolyte of 2.5 M H₂SO₄ and a cathode of platinum mesh. The cell was maintained at -4°C, and was swept with approx. 75cm³ min⁻¹ of nitrogen to carry the gas evolved at the anode out of the cell for analysis.

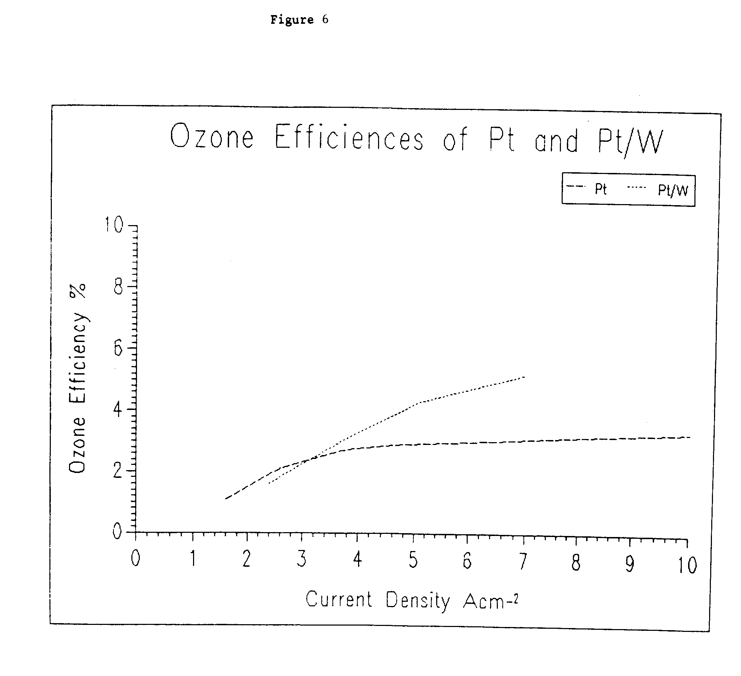

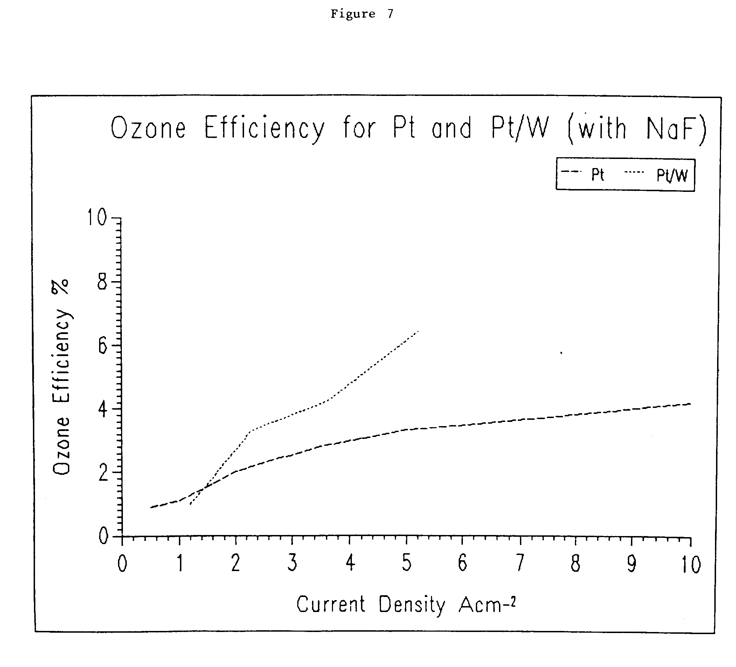

The amount of ozone generated was recorded at various currents, each current being maintained for 15 to 20 minutes. Efficiency is plotted in Figure 6 against current density in Acm⁻² of platinum area. For comparison, the experiment was repeated using a platinum foil as the anode, and the results plotted on the same figure. It can be seen that there is a surprising improvement in ozone efficiency with increasing current density for the platinum/tungsten anode. The tests were repeated using an electrolyte of 2.5M H₂SO₄ containing 0.25g/l of sodium fluoride, and the results are plotted in Figure 7.

The Pt/W anodes were tested at steady current for 55 hours without any apparent loss in activity. Other tests with a tungsten film having no platinum deposit resulted in a thick blue oxide layer forming on the surface, which acted as an insulator. Platinum foil as anode did not significantly corrode but exhibited only a low yield of ozone. Other materials tested on tungsten generally formed an insulating oxide (eg Ti, Ta) or exhibited substantial corrosion (Au, Co, Mo, Pb, Cr), even to the extent of dissolution or disintegration.

### EXAMPLE 7

Sputtered platinum on tungsten electrodes were used as the anode in an electrolysis cell to test the effect of varying the electrolyte composition.

| Concⁿ (M) | Chemical | Efficiency (%)* |
|---|---|---|
| | **Salts** | |
| 1.5 | NaClO₃ | 1.8 |
| 0.25 | Na₂S₂O₈ | 8.5 |
| 0.25 | K₂SO₄ | 10 |
| 1.5 | Na₂S₂O₈ | 7.1 |
| 1.5 | NaClO₄ | 12 |

| | **Acid** | |
|---|---|---|
| 1.5 | CF₃SO₃H | 6.7 |
| 0.75 | H₂SO₄ | 6.5 |

| | | |
|---|---|---|
| * = percentage of current flow which yields ozone, at 10 Acm⁻² Pt. | | |

Yields from electrodes such as Pt and Pb metals foils would typically be approximately 3.7% in sulphuric acid at 10 Acm⁻² and 2.0% in sulphuric acid at 2 Acm⁻² respectively. The lead foil is very rapidly corroded under such conditions.

### EXAMPLE 8

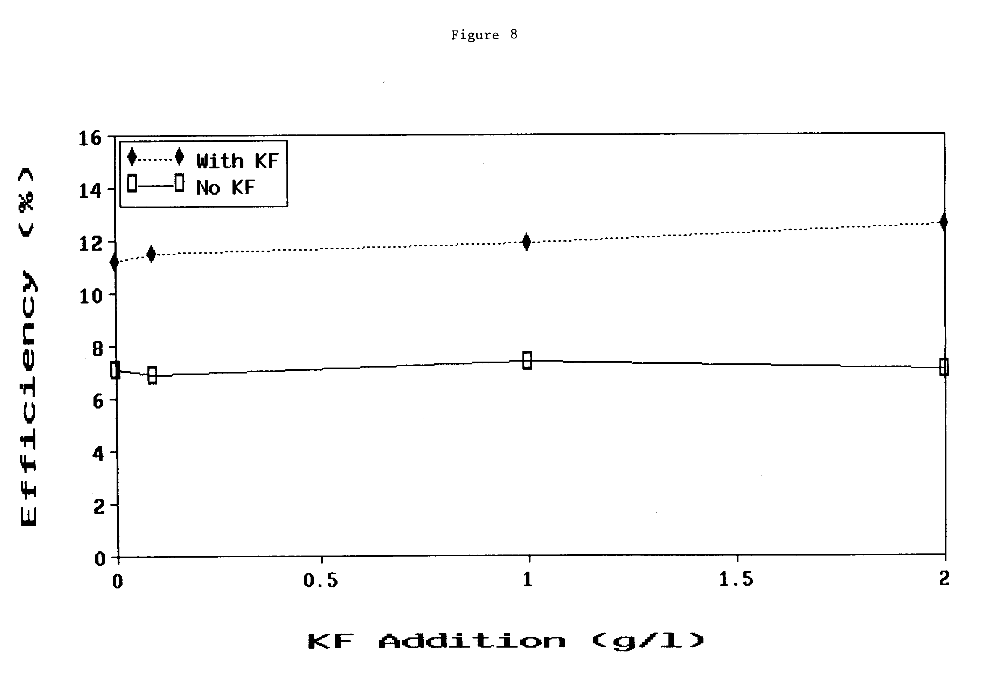

Tests performed using sputtered platinum on tungsten electrodes in sulphuric acid electrolyte demonstrated the enhancement in efficiency which could be obtained by the addition of fluoride ion as potassium fluoride. Over the range of 0.01 dm⁻³ to 2.0g dm⁻³ (0.17-34mM) an enhancement of approximately 60% was observed. This is illustrated in Figure 8.

## Claims

1. An ozone generating cell comprising an anode for forming ozone, said anode comprising a first electrolyte contacting area consisting essentially of at least one of tungsten, titanium, tantalum and niobium, and in contact therewith, a second electrolyte contacting area of platinum or a platinum-containing material, a cathode and an electrolyte.

2. A cell according to claim 1, wherein in said anode the second electrolyte contacting area is platinum.

3. A cell according to claim 1 or 2, wherein in said anode the first electrolyte contacting area consists essentially of at least one of tungsten and niobium.

4. A cell according to any preceding claim, wherein in said anode the second electrolyte contacting area comprises at least one area of up to 30mm².

5. A cell according to claim 4, wherein in said anode the second electrolyte contacting area comprises at least one area of 0.005-25mm².

6. A cell according to any preceding claim, wherein in said anode the second electrolyte contacting area comprises at least one area which is circular, square or rectangular in shape.

7. A process for the production of ozone by electrolysis of an electrolyte wherein ozone is generated at a anode which comprises a first electrolyte contacting area which consists essentially of at least one of tungsten, titanium, tantalum and niobium and, in contact therewith, a second electrolyte contacting area of platinum or a platinum-containing material.

8. A process according to claim 7, wherein the second electrolyte contacting area is of platinum.

9. A process according to claim 7 or 8, wherein the electrolyte is selected from aqueous solutions of alkali metal-, alkaline earth metal-, and ammonium-salts having anions which are resistant to oxidation, organic acids and mineral acids.

10. A process according to any of claims 7-9, wherein the electrolyte is acidic or neutral.

11. A process according to any of claims 7-10, wherein the electrolyte is liquid.

12. A process according to any of claims 7-11, wherein the electrolyte is sulphuric acid.

13. A process according to claim 12, wherein the sulphuric acid is in concentration of 0.01-8N.

14. A process according to any of claims 7-13, wherein the electrolyte also comprises fluoride ions.

## Patentansprüche

1. Eine ozonerzeugende Zelle umfassend eine Anode zur Bildung von Ozon, wobei die Anode eine erste Elektrolytkontaktfläche, die im wesentlichen aus mindestens einem der Elemente Wolfram, Titan, Tantal und Niob besteht, und in Kontakt damit eine zweite Elektrolytkontaktfläche aus Platin oder einem platinhaltigen Material umfaßt, eine Kathode und einen Elektrolyten.

2. Zelle nach Anspruch 1, worin bei der Ancode die zweite Elektrolytkontaktfläche Platin ist.

3. Zelle nach Anspruch 1 oder 2, worin bei der Anode die erste Elektrolytkontaktfläche im wesentlichen aus mindestens einem der Elemente Wolfram und Niob besteht.

4. Zelle nach einem der vorhergehenden Ansprüche, worin bei der Anode die zweite Elektrolytkontaktfläche mindestens eine Fläche von bis zu 30 mm² umfaßt.

5. Zelle nach Anspruch 4, worin bei der Anode die zweite Elektrolytkontaktfläche mindestens eine Fläche von 0,005 bis 25 mm² umfaßt.

6. Zelle nach einem der vorhergehenden Ansprüche, worin bei der Anode die zweite Elektrolytkontaktfläche mindestens eine Fläche umfaßt, die rund, quadratisch oder rechteckig ist.

7. Verfahren zur Erzeugung von Ozon durch Elektrolyse eines Elektrolyten, wobei Ozon an einer Anode erzeugt wird, die eine erste Elektrolytkontaktfläche, die im wesentlichen aus mindestens einem der Elemente Wolfram, Titan, Tantal und Niob besteht, und in Kontakt damit eine zweite Elektrolytkontaktfläche aus Platin oder einem platinhaltigen Material umfaßt.

8. Verfahren nach Anspruch 7, worin die zweite Elektrolytkontaktfläche aus Platin ist.

9. Verfahren nach Anspruch 7 oder 8, worin der Elektrolyt ausgewählt ist aus wäßrigen Lösungen von Alkali-, Erdalkali- und Ammoniumsalzen mit Anionen, die gegenüber einer Oxidation beständig sind, organischen Säuren und Mineralsäuren.

10. Verfahren nach einem der Ansprüche 7 bis 9, worin der Elektrolyt sauer oder neutral ist.

11. Verfahren nach einem der Ansprüche 7 bis 10, worin der Elektrolyt flüssig ist.

12. Verfahren nach einem der Ansprüche 7 bis 11, worin der Elektrolyt Schwefelsäure ist.

13. Verfahren nach Anspruch 12, worin die Schwefelsäure eine Konzentration von 0,01 bis 8 n hat.

14. Verfahren nach einem der Ansprüche 7 bis 13, worin der Elektrolyt auch Fluoridionen enthält.

## Revendications

1. Cellule engendrant de l'ozone et comprenant une anode pour former de l'ozone, ladite anode comprenant une première zone de contact avec un électrolyte, cette zone consistant essentiellement en au moins l'un des métaux tungstène, titane, tantale et niobium et, en contact avec ce métal, une seconde zone de platine, ou d'une matière contenant du platine, qui vient en contact avec l'électrolyte, une cathode et un électrolyte.

2. Cellule selon la revendication 1, dans laquelle, dans ladite anode, la seconde zone venant au contact de l'électrolyte est en platine.

3. Cellule selon la revendication 1 ou 2, dans laquelle, dans ladite anode, la première zone venant au contact de l'électrolyte consiste essentiellement en au moins l'un des métaux tungstène et niobium.

4. Cellule selon l'une quelconque des revendications précédentes, dans laquelle, dans ladite anode, la seconde zone venant au contact de l'électrolyte comprend au moins une surface ayant jusqu'à 30 mm².

5. Cellule selon la revendication 4, dans laquelle, dans ladite anode, la seconde zone venant au contact de l'électrolyte comprend au moins une aire de 0,005 à 25 mm² de surface.

6. Cellule selon l'une quelconque des revendications précédentes, dans laquelle, dans ladite anode, la seconde zone venant au contact de l'électrolyte comprend au moins une zone de forme circulaire, carrée ou rectangulaire.

7. Procédé pour la production d'ozone par électrolyse d'un électrolyte, dans lequel de l'ozone est engendré à une anode qui comprend une première zone venant au contact de l'électrolyte et consiste essentiellement en au moins l'un des métaux tungstène, titane, tantale et niobium et, en contact avec cette première zone, une seconde zone venant au contact de l'électrolyte et qui est en du platine ou en une matière contenant du platine.

8. Procédé selon la revendication 7, dans lequel la seconde zone venant au contact de l'électrolyte est en platine.

9. Procédé selon la revendication 7 ou 8, dans lequel l'électrolyte est choisi parmi des solutions aqueuses de sels de métaux alcalins, de métaux alcalino-terreux et d'ammonium ayant des anions qui résistent à une oxydation, à des acides organiques et à des acides minéraux.

10. Procédé selon l'une quelconque des revendications 7 à 9, dans lequel l'électrolyte est acide ou neutre.

11. Procédé selon l'une quelconque des revendications 7 à 10, dans lequel l'électrolyte est liquide.

12. Procédé selon l'une quelconque des revendications 7 à 11, dans lequel l'électrolyte est de l'acide sulfurique.

13. Procédé selon la revendication 12, dans lequel l'acide sulfurique est présent en une concentration de 0,01 à 8 N.

14. Procédé selon l'une quelconque des revendications 7 à 13, dans lequel l'électrolyte comprend également des ions fluorure.
